# EUROPEAN PATENT APPLICATION

(11) **EP 4 791 094 A1**
(43) Date of publication of application: **12.08.2026**
(21) Application number: 24884460.7
(22) Date of filing: 18.10.2024
(51) Int. Cl.: H04W 56/00

(54) **COMMUNICATION METHOD AND APPARATUS**

(30) Priority: 31.10.2023 CN 202311444145
(71) Applicant: HUAWEI TECHNOLOGIES CO., LTD., Shenzhen 518129 (CN)
(72) Inventor: YOU, Chunhua, Shenzhen, Guangdong 518129 (CN); FAN, Qiang, Shenzhen, Guangdong 518129 (CN)
(74) Representative: MERH-IP Matias Erny Reichl Hoffmann Patentanwälte PartG mbB
(86) International application number: PCT/CN2024/125726
(87) International publication number: WO 2025/092456

(57) **Abstract**

This application relates to the field of communication technologies, and discloses a communication method and apparatus. The method includes: A first network device receives a first message from a second network device, where the first message is used to request the first network device to perform early synchronization for carrier aggregation, a primary cell of the carrier aggregation is a first cell, a secondary cell of the carrier aggregation includes a second cell, and the early synchronization includes early uplink synchronization and/or early downlink synchronization; and the first network device sends first indication information to a terminal based on the first message, where the first indication information indicates the terminal to perform early synchronization with the second cell. According to the foregoing method, in a cell switch scenario, the early synchronization for the carrier aggregation is performed, so that after the terminal is switched to the first cell, data transmission can be quickly performed in a carrier aggregation manner, thereby ensuring high-rate data transmission.

## Description

### CROSS-REFERENCE TO RELATED APPLICATIONS

This application claims priority to Chinese Patent Application No. 202311444145.6, filed with the China National Intellectual Property Administration on October 31, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Cell switch is a very important feature in communication systems. Before signal quality of a serving cell deteriorates, a network device switches a terminal device to a neighboring cell with good signal quality, to provide lossless or packet-loss-free communication services.

However, in a cell switch scenario, how to ensure high-rate data transmission still needs to be further studied.

### SUMMARY

This application provides a communication method and an apparatus, to implement early synchronization for carrier aggregation, so that after a terminal is switched to a primary cell of the carrier aggregation, data transmission can be quickly performed in a secondary cell of the carrier aggregation, thereby ensuring high-rate data transmission.

According to a first aspect, an embodiment of this application provides a communication method. The method may be applied to a first network device or a module (for example, a chip or a circuit) in the first network device. For example, the method is applied to the first network device. In the method, the first network device receives a first message from a second network device, where the first message is used to request the first network device to perform early synchronization for carrier aggregation, a primary cell of the carrier aggregation is a first cell, a secondary cell of the carrier aggregation includes a second cell, and the early synchronization includes early uplink synchronization and/or early downlink synchronization; and sends first indication information to the terminal based on the first message, where the first indication information indicates the terminal to perform early synchronization with the second cell.

According to the foregoing method, in a cell switch scenario, the early synchronization for the carrier aggregation is performed, so that after the terminal is switched to the first cell, data transmission can be quickly performed in a carrier aggregation manner, thereby ensuring high-rate data transmission.

In a possible design, after sending the first indication information to the terminal, the method further includes: sending a switch command message to the terminal, where the switch command message indicates to switch the terminal from a primary cell to the first cell.

In a possible design, the early synchronization includes uplink synchronization and/or downlink synchronization before the terminal receives the switch command message.

In a possible design, the first message includes identification information of the second cell, and the identification information of the second cell is used to request the first network device to perform early synchronization for the second cell. In this way, the identification information of the second cell is carried in the first message, so that the first message can clearly indicate a cell for which the first network device is requested to perform early synchronization.

In a possible design, the first indication information is used to activate a transmission configuration indication TCI state of the second cell, and the TCI state is used by the terminal to determine downlink timing of the second cell.

In a possible design, the method further includes: sending information about an activated TCI state of the second cell to the second network device. In this way, the information about the activated TCI state of the second cell is sent to the second network device, so that after the terminal is subsequently switched to the first cell, the terminal can communicate, based on the activated TCI state of the second cell, with a DU or an access network device to which the first cell belongs, to improve communication efficiency.

In a possible design, the first indication information indicates the terminal to send a random access signal in the second cell, and the random access signal is used to determine a timing advance TA of the second cell.

In a possible design, the method further includes: receiving the TA of the second cell; and sending the switch command message to the terminal, where the switch command message includes the TA of the second cell.

In a possible design, the switch command message further includes a TA of the first cell.

In a possible design, the method further includes: sending second indication information to the second network device, where the second indication information indicates that the early synchronization for the carrier aggregation has been performed. In this way, this helps the DU or the access network device to which the first cell belongs learn whether the early synchronization is completed for the terminal and the second cell.

In a possible design, the second indication information includes the identification information of the second cell, and the identification information of the second cell indicates that the early synchronization for the second cell has been performed.

In a possible design, the second indication information includes synchronization manner information, and the synchronization manner information indicates that a manner of the early synchronization is a random access-based manner or a manner based on downlink reference signal measurement by the terminal.

Usually, accuracy of synchronization performed based on random access is relatively high, and accuracy of synchronization performed based on downlink reference signal measurement by the terminal is relatively low. Therefore, after receiving the synchronization manner information, the DU or the access network device to which the first cell belongs may determine, based on the synchronization manner information, whether the terminal subsequently needs to be indicated to adjust the TA of the second cell. For example, if the synchronization manner information indicates that the manner of the early synchronization is the manner based on downlink reference signal measurement by the terminal, the DU or the access network device to which the first cell belongs subsequently may indicate the terminal to adjust the TA of the second cell, to improve synchronization accuracy.

In a possible design, the method further includes: receiving channel state information CSI that is of the second cell and that is sent by the terminal, where the CSI of the second cell is determined based on the first indication information; and sending the CSI of the second cell to the second network device.

In this way, because the CSI of the second cell is obtained by the terminal through measurement in advance (for example, obtained through measurement before the terminal is switched to the first cell), after the terminal is switched to the first cell, the DU or the access network device to which the first cell belongs may allocate resources to the terminal based on the CSI that is of the second cell and that is measured in advance, to quickly perform data transmission in the second cell.

According to a second aspect, an embodiment of this application provides a communication method. The method may be applied to a second network device or a module (for example, a chip or a circuit) in the second network device. For example, the method is applied to the second network device. In the method, the second network device sends a first message to a first network device, where the first message is used to request the first network device to perform early synchronization for carrier aggregation, a primary cell of the carrier aggregation is a first cell, a secondary cell of the carrier aggregation includes a second cell, and the early synchronization includes early uplink synchronization and/or early downlink synchronization; and receiving a second message from the first network device, where the second message indicates that the request of the first message is accepted.

In a possible design, the method further includes: receiving second indication information from the first network device or a terminal, where the second indication information indicates that the early synchronization for the carrier aggregation has been performed.

In a possible design, the second indication information includes identification information of the second cell, and the identification information of the second cell indicates that early synchronization for the second cell has been performed.

In a possible design, the second indication information includes synchronization manner information, and the synchronization manner information indicates that a manner of the early synchronization is a random access-based manner or a manner based on downlink reference signal measurement by the terminal.

In a possible design, the method further includes: receiving CSI of the second cell from the first network device or the terminal, where the CSI of the second cell is determined before the terminal is switched to the first cell.

In a possible design, the method further includes: receiving information about an activated TCI state of the second cell from the first network device or the terminal.

According to a third aspect, an embodiment of this application provides a communication method. The method may be applied to a terminal or a module (for example, a chip or a circuit) in the terminal. For example, the method is applied to the terminal. In the method, the terminal receives configuration information for carrier aggregation, where a primary cell of the carrier aggregation is a first cell, and a secondary cell of the carrier aggregation includes a second cell; receives first indication information, where the first indication information indicates the terminal to perform early synchronization with the second cell, and the early synchronization includes early uplink synchronization and/or early downlink synchronization; and performs early synchronization with the second cell based on the first indication information.

In a possible design, after receiving first indication information, the method further includes: receiving a switch command message, where the switch command message indicates to switch the terminal to the first cell, and the switch command message includes a TA of the second cell.

In a possible design, the method further includes: sending second indication information, where the second indication information indicates that early synchronization for the carrier aggregation has been performed.

In a possible design, the second indication information includes identification information of the second cell, and the identification information of the second cell indicates that the early synchronization for the second cell has been performed.

In a possible design, the second indication information includes synchronization manner information, and the synchronization manner information indicates that a manner of the early synchronization is a random access-based manner or a manner based on downlink reference signal measurement by the terminal.

In a possible design, the method further includes: sending CSI of the second cell, where the CSI of the second cell is determined based on the first indication information.

In a possible design, the first indication information is used to activate a transmission configuration indication TCI state of the second cell; and performing early synchronization with the second cell based on the first indication information includes: determining downlink timing of the second cell based on an activated TCI state of the second cell.

In a possible design, the method further includes: sending information about the activated TCI state of the second cell.

In a possible design, the first indication information indicates the terminal to send a random access signal in the second cell; and performing early synchronization with the second cell based on the first indication information includes: sending the random access signal in the second cell based on the first indication information, where the random access signal is used to determine the TA of the second cell.

It should be understood that, for beneficial effects of related technical features in the second aspect and the third aspect, refer to the descriptions of the first aspect. Details are not described again.

According to a fourth aspect, this application provides a communication apparatus. The communication apparatus has a function of implementing the first aspect to the third aspect. For example, the communication apparatus includes a corresponding module, unit, or means for performing operations in the first aspect to the third aspect. The function, the unit, or the means may be implemented by software, may be implemented by hardware, or may be implemented by hardware by executing corresponding software.

In a possible design, the communication apparatus includes a processing unit and a communication unit. The communication unit may be configured to receive and send a signal, to implement communication between the communication apparatus and another apparatus. For example, the communication unit is configured to send system information to a terminal. The processing unit may be configured to perform some internal operations of the communication apparatus. Functions performed by the processing unit and the communication unit may correspond to the operations in the first aspect to the third aspect.

In a possible design, the communication apparatus includes a processor, and the processor may be configured to be coupled to a memory. The memory may store a necessary computer program or necessary instructions for implementing the functions in the first aspect to the third aspect. The processor may execute the computer program or the instructions stored in the memory. When the computer program or the instructions are executed, the communication apparatus is caused to implement the method in any possible design or implementation in the first aspect to the third aspect.

In a possible design, the communication apparatus includes a processor and a memory. The memory may store a necessary computer program or necessary instructions for implementing the functions in the first aspect to the third aspect. The processor may execute the computer program or the instructions stored in the memory. When the computer program or the instructions are executed, the communication apparatus is caused to implement the method in any possible design or implementation in the first aspect to the third aspect.

In a possible design, the communication apparatus includes a processor and an interface circuit. The processor is configured to: communicate with another apparatus through the interface circuit, and perform the method in any possible design or implementation in the first aspect to the third aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system may include a first network device, a second network device, and a terminal. The first network device is configured to perform the method according to the first aspect, the second network device is configured to perform the method according to the second aspect, and the terminal is configured to perform the method according to the third aspect.

According to a sixth aspect, this application provides a computer-readable storage medium, where the computer storage medium stores computer-readable instructions, and when a computer reads and executes the computer-readable instructions, the computer is caused to perform the method according to any one of the possible designs of the first aspect to the third aspect.

According to a seventh aspect, this application provides a computer program product. When a computer reads and executes the computer program product, the computer is caused to perform the method according to any one of the possible designs of the first aspect to the third aspect.

According to an eighth aspect, this application provides a chip, where the chip includes a processor, and the processor is coupled to a memory, and is configured to read and execute a software program stored in the memory, to implement the method according to any one of the possible designs of the first aspect to the third aspect.

These aspects or another aspect of this application is clearer and more comprehensible in descriptions of the following embodiments.

### BRIEF DESCRIPTION OF DRAWINGS

FIG. 1 is a diagram of a communication system applicable to an embodiment of this application;
FIG. 2A is a diagram of a CU-DU split architecture according to an embodiment of this application;
FIG. 2B is a diagram of another CU-DU split architecture according to an embodiment of this application;
FIG. 3A is a diagram of a downlink timing difference according to an embodiment of this application;
FIG. 3B is a diagram of a timing advance according to an embodiment of this application;
FIG. 4 is a schematic flowchart corresponding to a communication method according to Embodiment 1 of this application;
FIG. 5 is a schematic flowchart corresponding to a communication method according to Embodiment 2 of this application;
FIG. 6 is a schematic flowchart corresponding to a communication method according to Embodiment 3 of this application;
FIG. 7 is a block diagram of a possible example of an apparatus according to an embodiment of this application;
FIG. 8 is a diagram of a structure of a network device according to an embodiment of this application; and
FIG. 9 is a diagram of a structure of a terminal according to an embodiment of this application.

### DESCRIPTION OF EMBODIMENTS

The following describes technical solutions in embodiments of this application with reference to accompanying drawings in embodiments of this application. The technical solutions in embodiments of this application may be applied to various communication systems, such as a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, like a long term evolution (long term evolution, LTE) system, a 5th generation (5th generation, 5G) mobile communication system, like a new radio (new radio, NR) system, and a future evolved communication system, like a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

The communication system and a service scenario described in embodiments of this application are intended to describe the technical solutions in embodiments of this application more clearly, and do not constitute a limitation on the technical solutions provided in embodiments of this application. A person of ordinary skill in the art may learn that: With evolution of a network architecture and emergence of a new service scenario, the technical solutions provided in embodiments of this application are also applicable to similar technical problems.

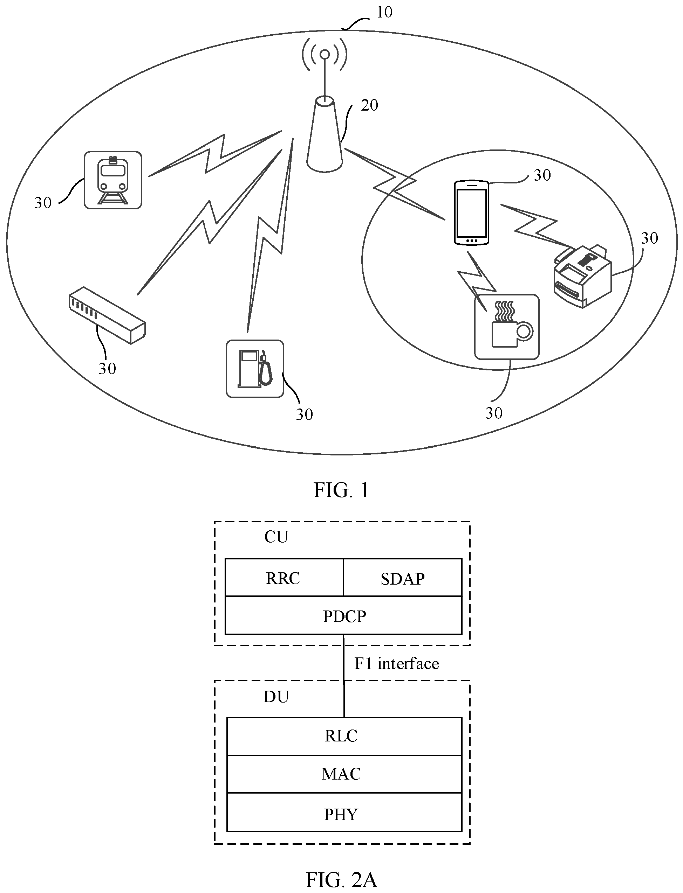

For ease of understanding embodiments of this application, a communication system shown in FIG. 1 is first used as an example to describe in detail a communication system applicable to embodiments of this application. As shown in FIG. 1, a communication system 10 includes one or more access network devices 20 and one or more terminals 30. An interface between the access network device and the terminal may be a Uu interface (or referred to as an air interface), and data transmission may be performed between the access network device 20 and the terminal 30 by using an air interface resource. For example, the terminal may be located in a communication coverage area of one or more cells of the access network device, and there may be one or more cells that provide services for the terminal (that is, serving cells of the terminal). When there are a plurality of serving cells of the terminal, the terminal may operate in a carrier aggregation (carrier aggregation, CA) manner.

### 1. Terminal

The terminal may be a terminal that accesses the foregoing communication system and that has a wireless transceiver function, or may be a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a pad (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### 2. Access network device

The access network device is a device that is located on a network side of the foregoing communication system and that has a wireless transceiver function, or may be a chip or a chip system that may be disposed in the device.

For example, the access network device in embodiments of this application may be an access point (access point, AP), for example, a home gateway, a router, a server, a switch, or a bridge in a Wi-Fi system, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a radio relay node, a radio backhaul node, a transmission point (transmission and reception point, TRP; or transmission point, TP), or the like, may be a next generation base station (next generation NodeB, gNB) in a 5G system, or a network node that forms a gNB, for example, a central unit (central unit, CU), a distributed unit (distributed unit, DU), or a road side unit (road side unit, RSU) that has a base station function, or may be a satellite or a base station in various forms in the future.

### 3. Communication between the terminal and the access network device

Communication between the terminal and the access network device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (physical layer, PHY). A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of a 3rd generation partnership project (3rd generation partnership project, 3GPP).

Using downlink data transmission as an example, downlink data may be correspondingly encapsulated at each layer of the access network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer.

From a perspective of the terminal, after a physical layer of the terminal receives a transport block from the access network device, the transport block may be sequentially transferred from the physical layer to upper layers, and may be correspondingly decapsulated at each layer. In other words, processing performed at each layer of the terminal may be an inverse process of processing performed at each layer of the access network device.

### 4. CU-DU split architecture

For example, in some possible network structures, the access network device may include one or more central units (central units, CUs) and one or more distributed units (distributed units, DUs), and a plurality of DUs may be centrally controlled by one CU. This architecture may be referred to as the CU-DU split architecture. For example, an interface between the CU and the DU may be referred to as an F1 interface. A control plane (control panel, CP) interface may be an F1-C interface, and a user plane (user panel, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

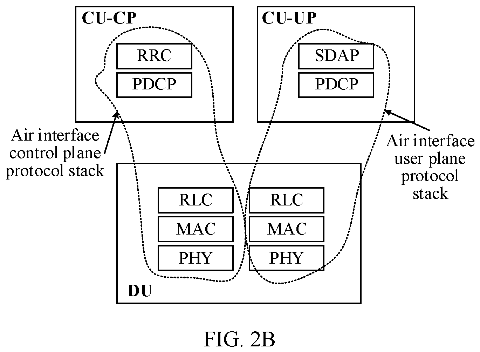

Further, a function of the CU may be implemented by a same entity, or may be implemented by different entities. For example, functions of the CU may be further divided. To be specific, a control plane and a user plane are split and implemented by different entities: a control plane CU entity (that is, a CU-CP entity) and a user plane CU entity (that is, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to the plurality of coordinated CU-CPs. This improves flexibility of the CU-CP. FIG. 2B is a diagram of distribution of air interface protocol stacks. As shown in FIG. 2B, for both a user plane and a control plane, an air interface protocol stack may be that an RLC layer, a MAC layer, and a PHY layer are on a DU, and a PDCP layer and upper protocol layers are on a CU.

It should be noted that in the architectures shown in FIG. 2A and FIG. 2B, signaling generated by the CU may be sent to a terminal through the DU, or signaling generated by a terminal may be sent to the CU through the DU. The DU may transparently transmit the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed to be data at the physical layer and the data is sent to the terminal, or is converted from received data at the physical layer. In this architecture, the signaling at the RRC layer or the PDCP layer may also be considered as being sent by the DU, or sent by the DU and a radio frequency apparatus.

It may be understood that a quantity of access network devices and a quantity of terminals included in the communication system are not limited in this embodiment of this application. Moreover, in addition to the access network device and the terminal, the communication system may further include another device or network element, for example, a core network device or a relay device. This is not limited in this embodiment of this application.

The following first describes related technical features in embodiments of this application. It should be noted that, these explanations are intended to make embodiments of this application easier to understand, but should not be construed as a limitation on the protection scope claimed in this application.

### 1. Cell switch

The cell switch can be classified into two types. One is cell switch implemented based on a layer 1/layer 2, which may be referred to as layer 1/layer 2 switch or layer 1/layer 2 triggered mobility (L1/L2 triggered mobility, LTM). The other is cell switch implemented based on a layer 3, which may be referred to as layer 3 switch (L3 handover). The layer 1 may be a physical layer, the layer 2 may be any one or more of a MAC layer, an RLC layer, a PDCP layer, and an SDAP layer, and the layer 3 may be an RRC layer. Because the layer 1 and the layer 2 are lower than the RRC layer (the layer 3) in a protocol stack, the layer 1/layer 2 switch may also be referred to as low-layer switch, bottom-layer switch, or lower-layer switch. A name of a specific switch technology is not limited in this application.

For the layer 3 switch, in a CU-DU split architecture, a CU receives a measurement result (the measurement result is forwarded by a DU to the CU) of a terminal, determines, based on the measurement result, whether to initiate switch, and if determining to initiate the switch, sends a switch command to the DU, and the DU sends the switch command to the terminal. This process includes communication interaction (that is, interaction on an F1 interface) between the CU and the DU, and a maximum transmission delay of the F1 interface is approximately 3 ms to 10 ms. Consequently, a specific switch delay is caused.

However, a layer 1/layer 2 switch decision is delivered from the CU to the DU. To be specific, the DU determines, based on a measurement result of the terminal, whether to initiate switch (LTM cell switch), and directly sends a switch command message to the terminal, so that F1 interaction can be effectively reduced, and a switch delay can be reduced.

### 2. Cell switch scenario

When the terminal is switched between different cells, there may be a plurality of specific switch scenarios. For example, the switch scenarios may be classified based on a location relationship between a source cell and a target cell.

When an access network device uses the CU-DU split architecture (for example, the access network device includes one CU and a plurality of DUs, the plurality of DUs are centrally controlled by one CU, and each of the plurality of DUs may include one or more cells), the location relationship between the source cell and the target cell may be whether the source cell and the target cell belong to a same CU and/or a same DU. "The DU includes one or more cells" may also be described as "the DU manages or controls one or more cells", "one or more cells of the DU", or "one or more cells belong to the DU". Three possible switch scenarios, that is, Scenario 1 to Scenario 3, are described herein.

Scenario 1: The terminal is switched from a cell of the DU to another cell of the DU. In other words, the source cell and the target cell of the terminal belong to a same DU. Cell switch corresponding to Scenario 1 is intra-DU (intra-DU) switch.

Scenario 2: The terminal is switched from a cell of a DU 1 controlled by the CU to a cell of a DU 2 controlled by the CU. In this case, the DU 1 may be referred to as a source DU, and the DU 2 may be referred to as a target DU. In other words, the source cell and the target cell of the terminal belong to different DUs controlled by a same CU. Cell switch corresponding to Scenario 2 is inter-DU (inter-DU) switch.

Scenario 3: The terminal is switched from a cell of a DU 1 controlled by a CU 1 to a cell of a DU 3 controlled by a CU 2. In this case, the CU 1 may be referred to as a source CU, and the CU 2 may be referred to as a target CU. In other words, the source cell and the target cell of the terminal belong to different DUs controlled by different CUs. Cell switch corresponding to Scenario 2 is inter-CU (inter-CU) switch.

When the access network device is considered as a whole (for example, a gNB), the location relationship between the source cell and the target cell may be whether the source cell and the target cell belong to a same access network device. Two possible switch scenarios, that is, Scenario 4 and Scenario 5, are described herein.

Scenario 4: The terminal is switched from a cell of an access network device 1 to a cell of an access network device 2. In this case, the access network device 1 may be referred to as a source access network device, and the access network device 2 may be referred to as a target access network device. In other words, the source cell and the target cell of the terminal belong to different access network devices. Cell switch corresponding to Scenario 4 is inter-station (inter-gNB) switch.

Scenario 5: The terminal is switched from a cell of an access network device to another cell of the access network device. In other words, the source cell and the target cell of the terminal belong to a same access network device. Cell switch corresponding to Scenario 5 is intra-station (intra-gNB) switch.

The communication method provided in embodiments of this application may be applicable to any one of the foregoing scenarios.

### 3. Downlink synchronization

Downlink timing is used for downlink synchronization between a terminal and an access network device. The downlink timing may be a cell-level parameter, and each cell has corresponding downlink timing. The downlink timing is defined as time at which a first path (in terms of time) of a corresponding downlink frame used by the terminal to determine the downlink timing is received from a reference cell at an antenna of the UE. For details, refer to an existing protocol.

A 5G communication system is used as an example. A slot may be used as a basic time unit for uplink and downlink transmission. In other words, data transmission is performed once in each slot. A slot start moment of the access network device is fixed, and uplink and downlink slots are aligned. For downlink transmission, when a downlink signal sent by the access network device arrives at a terminal side through air propagation, there is a propagation delay. For example, a signal propagation delay between a DU 1 to which a cell A belongs and the terminal is Tp1, and a signal propagation delay between a DU 2 to which a cell B belongs and the terminal is Tp2. Therefore, using the cell A as an example, the terminal may determine downlink timing of the cell A by receiving a reference signal of the cell A.

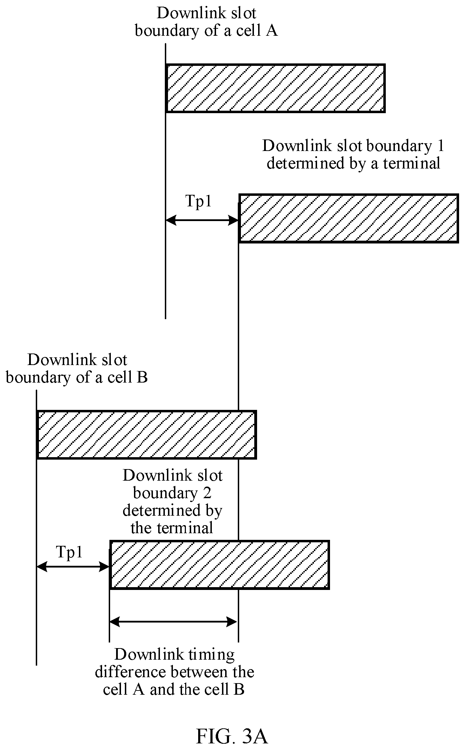

Herein, the following downlink timing difference is explained: As shown in FIG. 3A, a downlink reference signal 1 sent by the DU 1 at a downlink slot boundary of the cell A arrives at the terminal after Tp1, the terminal determines a downlink slot boundary 1 based on the received downlink reference signal 1, and there is a time difference Tp1 between the downlink slot boundary of the cell A and the downlink slot boundary 1 determined by the terminal; and a downlink reference signal 2 sent by the DU 2 at a downlink slot boundary of the cell B arrives at the terminal after Tp2, the terminal determines a downlink slot boundary 2 based on the received downlink reference signal 2, and there is a time difference Tp2 between the downlink slot boundary of the cell B and the downlink slot boundary 2 determined by the terminal. In this case, a time difference between a downlink slot boundary (for example, the downlink slot boundary 1) determined by the terminal for the cell A and a downlink slot boundary (for example, the downlink slot boundary 2) determined by the terminal for the cell B is a downlink timing difference between the cell A and the cell B. It may be understood that the downlink slot boundary may also be replaced with a downlink frame boundary.

### 4. Uplink synchronization

A timing advance (timing advance, TA) is used for uplink synchronization between a terminal and an access network device. The TA may be a cell-level parameter, and each cell has a corresponding TA. For example, the terminal may use a TA of a cell A to send uplink data to a DU to which the cell A belongs.

For cell switch, the terminal may obtain a TA of a target cell by sending a random access preamble. The following describes two possible manners: Manner 1 and Manner 2.

### Manner 1: Random access-based manner

Before performing cell switch (or before receiving a switch command), the terminal may send a random access preamble to a candidate DU in one or more candidate cells. For example, the one or more candidate cells include a cell A, and the terminal may send, in the cell A, a random access preamble to a DU 1 to which the cell A belongs, so that the DU 1 may obtain a TA of the cell A through measurement, and send the TA of the cell A to a target DU of the terminal (for example, a DU 2). Subsequently, if the DU 2 determines to switch the terminal to the cell A, the DU 2 may send the TA of the cell A to the terminal by using the switch command, so that the terminal may obtain the TA of the cell A, and perform communication based on the TA of the cell A after the terminal is switched to the cell A.

### Manner 2: Manner based on downlink reference signal measurement by the terminal

The terminal may determine downlink timing of a cell A by measuring a downlink reference signal of the cell A, and determine downlink timing of a cell B by measuring a downlink reference signal of the cell B. Further, the terminal may determine a TA of the cell A or a TA of the cell B based on a downlink timing difference between the cell A and the cell B.

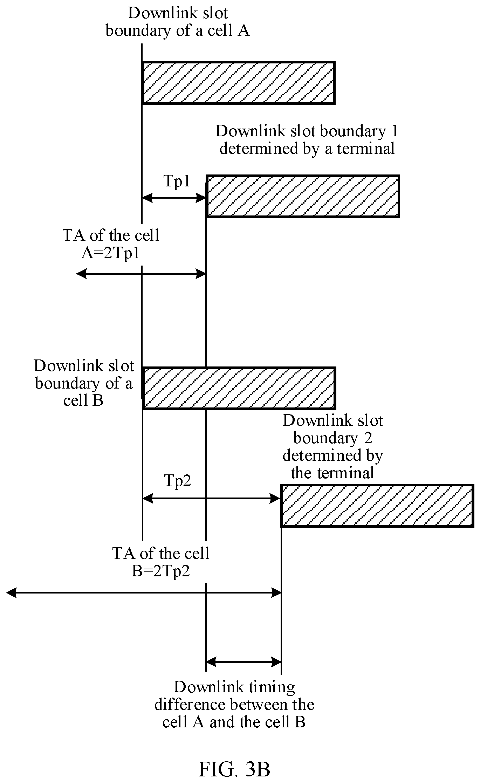

For example, the target cell is the cell A. If a downlink slot boundary of the cell A and a downlink slot boundary of the cell B (the cell B may be a source cell of the terminal) are synchronous, as shown in FIG. 3B, determining the TA of the cell A based on the downlink timing difference may be implemented by using the following Formula 1: $TA _ targetcell = TA _ sourcecell + 2 * \left(Tnew-Told\right)$

*TA_targetcell* represents the TA of the cell A, *TA_sourcecell* represents the TA of the cell B, *Tnew-Told* is the downlink timing difference between the cell A and the cell B, *Tnew* is the downlink timing of the cell A, and *Told* is the downlink timing of the cell B.

The foregoing Formula 1 may alternatively be changed to: $TA _ targetcell = TA _ sourcecell - 2 * \left(Told-Tnew\right)$

If the downlink slot boundary of the cell A and the downlink slot boundary of the cell B (the cell B may be a source cell of the terminal) are asynchronous, determining the TA of the cell A based on the downlink timing difference may be implemented by using the following Formula 2: $TA _ targetcell = TA _ sourcecell + 2 * \left(Tnew-Told\right) + offset$

*offset* represents an offset between the downlink slot boundary of the cell A and the downlink slot boundary of the cell B.

In addition, whether the downlink slot boundary of the cell A and the downlink slot boundary of the cell B are synchronous, and the offset between the downlink slot boundary of the cell A and the downlink slot boundary of the cell B may be indicated by the access network device to the terminal. A specific implementation is not limited.

Carrier aggregation is a technology in which intra-band or inter-band radio channel resources are aggregated to increase a data transmission rate of a user and reduce a delay. In a carrier aggregation scenario, a plurality of cells may provide a service for the terminal. In other words, the terminal has a plurality of serving cells, where one of the plurality of serving cells is a primary cell (primary cell, PCell), and another cell is a secondary cell (secondary cell, SCell). The terminal may simultaneously perform data transmission in the primary cell and the secondary cell. For example, the terminal may simultaneously send uplink data in the primary cell and the secondary cell. For another example, the terminal may simultaneously receive downlink data in the primary cell and the secondary cell.

In a cell switch scenario, after the terminal is switched to a target cell (the target cell is the primary cell of carrier aggregation), the terminal needs to first perform synchronization with the secondary cell. After the synchronization is completed, the terminal can perform data transmission in the secondary cell. In a process in which the terminal performs synchronization with the secondary cell, the terminal cannot perform data transmission in the secondary cell. Therefore, after the terminal is switched to the target cell, the terminal first performs data transmission in the primary cell (at a low rate in this case). After the terminal completes the synchronization with the secondary cell subsequently, the terminal can simultaneously perform data transmission in the primary cell and the secondary cell (at a high rate in this case). In this manner, in the cell switch scenario, data transmission cannot be quickly performed in a carrier aggregation manner. Consequently, a throughput is reduced, and high-rate data transmission cannot be ensured.

In view of this, embodiments of this application provide a communication method, to implement early synchronization for the carrier aggregation in the cell switch scenario, so as to ensure the high-rate data transmission. The communication method provided in embodiments of this application relates to at least one network device and a terminal. The following describes the network device in embodiments of this application with reference to some switch scenarios described above.
1. In the intra-DU switch (Scenario 1), the network device in embodiments of this application may include a first network device and a second network device. The second network device is a CU, the first network device is a DU managed by the CU, and both a source cell and a candidate cell of the terminal belong to the DU.
2. In the inter-DU switch (Scenario 2), the network device in embodiments of this application may include a first network device and a second network device, and optionally, further include a third network device. The second network device may be a CU, the first network device may be a first DU (that is, a source DU of the terminal) managed by the CU, and the third network device may be a second DU (that is, a candidate DU of the terminal) managed by the CU. The first DU, the second DU, and the CU may belong to a same access network device (for example, a gNB). In embodiments of this application, if the terminal is switched to a cell managed by the candidate DU, the candidate DU may also be referred to as a target DU. For other similar parts (for example, a candidate cell or a candidate access network device), refer to the descriptions herein.
3. In the inter-CU switch (Scenario 3), the network device in embodiments of this application may include a first network device and a second network device, and optionally, further include a third network device and/or a fourth network device. The second network device may be a first CU, the first network device may be a first DU (that is, a source DU of the terminal) managed by the first CU, the third network device may be a second CU, and the fourth network device may be a second DU (that is, a candidate DU of the terminal) managed by the second CU.
4. In the inter-station switch (Scenario 4), the network device in embodiments of this application may include a first network device and a second network device. The first network device may be a first access network device (a source access network device), and the second network device may be a second access network device (a candidate access network device).
5. In the intra-station switch (Scenario 5), the network device in embodiments of this application may include an access network device, and both a source access network device and a candidate access network device of the terminal are the access network device.

The communication method provided in embodiments of this application is described in detail below with reference to Embodiment 1 to Embodiment 3. Unless otherwise specified, the "terminal" may refer to the terminal, or may refer to a component in the terminal, for example, a chip or a chip system. The "network device" may refer to the network device, or may refer to a component in the network device, for example, a chip or a chip system.

### Embodiment 1

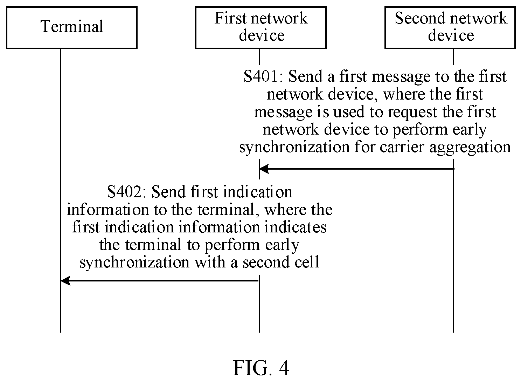

FIG. 4 is a schematic flowchart corresponding to a communication method according to Embodiment 1 of this application. As shown in FIG. 4, the method includes the following steps:
S401: A second network device sends a first message to a first network device, where the first message is used to request the first network device to perform early synchronization for carrier aggregation. Correspondingly, the first network device receives the first message.

Herein, a primary cell of the carrier aggregation is a first cell, a secondary cell of the carrier aggregation includes a second cell, and the secondary cell of the carrier aggregation may further include another cell (for example, a third cell). In this embodiment of this application, an example in which "the primary cell of the carrier aggregation is the first cell, and the secondary cell of the carrier aggregation is the second cell" is used for description. The primary cell and the secondary cell of the carrier aggregation may belong to a same network device (for example, a same DU or a same access network device).

The first network device may be a source DU or a source access network device of a terminal. When the first network device is the source DU of the terminal, the second network device may be a CU configured to manage the first network device (for example, in Scenario 1, Scenario 2, or Scenario 3), the primary cell and the secondary cell of the carrier aggregation may belong to a candidate DU, and in Scenario 2 and Scenario 3, the candidate DU and the source DU are different DUs. In this case, the second network device obtains configuration information for the carrier aggregation, and sends the configuration information for the carrier aggregation to the first network device. Further, the first network device may forward the configuration information for the carrier aggregation to the terminal. When the first network device is the source access network device of the terminal, the second network device may be a candidate access network device of the terminal (for example, in Scenario 4), the primary cell and the secondary cell of the carrier aggregation may belong to the candidate access network device, and the candidate access network device and the source access network device are different access network devices. In this case, the second network device sends configuration information for the carrier aggregation (for example, the configuration information for the carrier aggregation may be carried in the first message) to the first network device. Further, the first network device sends the configuration information for the carrier aggregation to the terminal. The configuration information for the carrier aggregation includes configuration information of each cell of the carrier aggregation. For details, refer to subsequent embodiments. It should be understood that, if the source access network device and the candidate access network device of the terminal are a same access network device (for example, in Scenario 5), S401 may not need to be performed.

For example, the first message includes candidate carrier aggregation information (namely, candidate CA information), and the candidate CA information is used to request the first network device to perform early synchronization for the carrier aggregation. For example, the candidate CA information includes information 1 and/or information 2. The information 1 indicates that the primary cell of the carrier aggregation is the first cell, and the secondary cell of the carrier aggregation is the second cell. The information 2 includes an identifier of one or more secondary cells (for example, an identifier of the second cell) of the carrier aggregation, and the identifier of the one or more secondary cells are used to request the first network device to perform early synchronization for the one or more secondary cells. In other words, when there are a plurality of secondary cells of the carrier aggregation, the information 2 may be used to specifically indicate specific secondary cells for which early synchronization is requested to be performed.

It may be understood that: (1) When the candidate CA information includes the information 1 but does not include the information 2, the candidate CA information is used to request, in an implicit manner, the first network device to perform early synchronization for all the secondary cells of the carrier aggregation. When the candidate CA information includes the information 1 and the information 2, the candidate CA information is used to request, in an explicit manner, the first network device to perform early synchronization for one or more specific secondary cells of the carrier aggregation. In this embodiment of this application, whether the first network device performs early synchronization for the primary cell is not limited. Usually, the first network device may perform early synchronization for the primary cell by default. Therefore, no additional information is needed in the first message to request the first network device to perform early synchronization for the primary cell.

(2) The foregoing uses the candidate CA information corresponding to a carrier aggregation case (to be specific, the primary cell of the carrier aggregation is the first cell, and the secondary cell of the carrier aggregation is the second cell) as an example. In another embodiment, the first message may include a plurality of pieces of candidate CA information, for example, first candidate CA information and second candidate CA information. A carrier aggregation case corresponding to the first candidate CA information is "the primary cell of the carrier aggregation is the first cell, and the secondary cell of the carrier aggregation is the second cell". A carrier aggregation case corresponding to the second candidate CA information is "the primary cell of the carrier aggregation is the second cell, and the secondary cell of the carrier aggregation is the first cell". For details, refer to the foregoing descriptions. For example, when the first message includes a plurality of pieces of candidate CA information, a network device to which a cell that is of the carrier aggregation and that corresponds to each piece of candidate CA information in the plurality of pieces of candidate CA information belongs is different from the first network device.

S402: The first network device sends first indication information to the terminal based on the first message, where the first indication information indicates the terminal to perform early synchronization with the second cell. Correspondingly, the terminal receives the first indication information.

Optionally, the first network device may further send a second message to the second network device, where the second message indicates that the request of the first message is accepted.

Herein, the early synchronization may include early uplink synchronization and/or early downlink synchronization.
1. When the early synchronization includes the early uplink synchronization, the first indication information indicates the terminal to perform early uplink synchronization with the second cell. In this case, the first indication information may be carried in downlink control information (downlink control information, DCI) or another possible message.

In a possible implementation, the first indication information indicates the terminal to send a random access signal in the second cell (that is, the first indication information indicates to perform early uplink synchronization in a random access-based manner). For example, the first indication information is a physical downlink control channel (physical downlink control channel, PDCCH) order (PDCCH order). Correspondingly, after receiving the first indication information, the terminal may send the random access signal in the second cell, where the random access signal is used to determine a TA of the second cell. After determining the TA of the second cell based on the random access signal, a DU or an access network device to which the second cell belongs may send the TA of the second cell to the first network device. Further, the first network device sends the TA of the second cell to the terminal (for example, the first network device sends the TA of the second cell to the terminal by using a switch command message in the following descriptions).

In another possible implementation, the first indication information indicates to perform early uplink synchronization in a manner based on downlink reference signal measurement by the terminal. Correspondingly, after receiving the first indication information, the terminal may determine the TA of the second cell according to Formula 1 or Formula 2.

2. When the early synchronization includes the early downlink synchronization, the first indication information indicates the terminal to perform early downlink synchronization with the second cell. In this case, the first indication information may be carried in a MAC layer message or another possible message, and the MAC layer message is, for example, a MAC control element (control element, CE). Specifically, the first indication information is used to activate a transmission configuration indication state (transmission configuration indication state, TCI state) of the second cell. For example, the first indication information includes information about an activated TCI state of the second cell. Correspondingly, the terminal may receive a downlink reference signal of the second cell based on the activated TCI state of the second cell, to determine (or track) downlink timing of the second cell.

3. When the early synchronization includes the early uplink synchronization and the early downlink synchronization, the first indication information may include indication information 1 and indication information 2. The indication information 1 indicates the terminal to perform early uplink synchronization with the second cell, and the indication information 2 indicates the terminal to perform early downlink synchronization with the second cell. For details, refer to the foregoing descriptions. Alternatively, the first network device may send one piece of indication information (namely, the first indication information) to the terminal, where the indication information indicates the terminal to perform early uplink synchronization and early downlink synchronization with the second cell.

There are a plurality of scenarios in which the first network device sends the first indication information to the terminal based on the first message. For example, the first network device may obtain location information of the terminal, and if determining, based on the location information of the terminal, that the terminal subsequently may move to a coverage area of the first cell, the first network device may determine, based on the candidate CA information in the first message, whether early synchronization needs to be performed for the secondary cell (namely, the second cell) corresponding to the first cell. If determining that the early synchronization needs to be performed for the second cell, the first network device sends the first indication information to the terminal.

Optionally, after sending the first indication information to the terminal, if determining to switch the terminal to the first cell, the first network device sends the switch command message to the terminal, where the switch command message indicates to switch the terminal from the primary cell to the first cell. Correspondingly, the terminal is switched to the first cell based on the switch command message. The early uplink synchronization may be uplink synchronization before the terminal receives the switch command message, and the early downlink synchronization may be downlink synchronization before the terminal receives the switch command message. Before receiving the switch command, the terminal performs synchronization with the second cell. Therefore, after the terminal is switched to the first cell, the terminal may simultaneously perform data transmission in the first cell and the second cell in a carrier aggregation manner.

Optionally, after the first network device sends the switch command message to the terminal, the first network device or the terminal may send at least one of the following (1), ②, ③, and ④ to a DU or an access network device to which the first cell belongs (that is, the DU or the access network device to which the second cell belongs). The following describes two possible implementations with reference to Implementation 1 and Implementation 2.

Implementation 1: After the first network device sends the switch command message to the terminal, if the first network device is the source DU of the terminal, the first network device may send, via CUs (for example, a first CU and a second CU), the at least one of the following ①, ②, ③, and ④ to the DU to which the first cell belongs, for example, send, by using an LTM cell change notification (cell change notification) message, the at least one of the following (1), ②, ③, and ④ to the DU to which the first cell belongs. If the first network device is the source access network device, the first network device may send the at least one of the following ①, ②, ③, and ④ to the access network device to which the first cell belongs (that is, the candidate access network device).

Implementation 2: After the first network device sends the switch command message to the terminal, the terminal may be switched to the first cell based on the switch command message. Further, the terminal may send, in the first cell, the at least one of the following ①, ②, ③, and ④ to the DU or the access network device to which the first cell belongs, for example, send, by using a MAC layer message, the at least one of the following ①, ②, ③, and ④ to the DU or the access network device to which the first cell belongs.

① Second indication information, where the second indication information indicates that the early synchronization for the carrier aggregation has been performed.

For example, the second indication information may include the identifier of the second cell, and the identifier of the second cell indicates that the early synchronization for the second cell has been performed. In other words, an identifier that is of a cell and that is included in the second indication information may be used to specifically indicate specific cells for which early synchronization has been performed.

For example, if the early synchronization includes the early uplink synchronization and the early downlink synchronization, the second indication information may include indication information 3 and indication information 4, where the indication information 3 indicates that early uplink synchronization for the carrier aggregation has been performed, and the indication information 4 indicates that early downlink synchronization for the carrier aggregation has been performed.

For Implementation 1, "early synchronization for the carrier aggregation has been performed" may be replaced with "early synchronization for the carrier aggregation has been completed" or "early synchronization for the carrier aggregation has been initiated". It can be learned from the foregoing descriptions that the first network device sends the first indication information to the terminal, to indicate the terminal to perform early synchronization with the second cell. The first network device may not know whether the terminal completes the early synchronization with the second cell. Therefore, when the first network device sends the first indication information to the terminal, the first network device may consider that "the early synchronization for the carrier aggregation has been performed", and send the second indication information to the DU or the access network device to which the first cell belongs.

Optionally, if the first network device does not send the first indication information to the terminal, the first network device may send third indication information to the DU or the access network device to which the first cell belongs, where the third indication information indicates that "early synchronization for the carrier aggregation is not performed". For example, the third indication information may include the identifier of the second cell, and the identifier of the second cell indicates that the early synchronization for the second cell is not performed.

For Implementation 2, "the early synchronization for the carrier aggregation has been performed" may be replaced with "the early synchronization for the carrier aggregation has been completed". It can be learned from the foregoing descriptions that the terminal may perform early synchronization with the second cell based on the first indication information. Therefore, when the terminal completes the early synchronization with the second cell, the terminal may send the second indication information to the DU or the access network device to which the first cell belongs.

Optionally, if the terminal does not complete the early synchronization with the second cell, the terminal may send third indication information to the DU or the access network device to which the first cell belongs, where the third indication information indicates that "the early synchronization for the carrier aggregation is not performed". For example, the third indication information may include the identifier of the second cell, and the identifier of the second cell indicates that the early synchronization for the second cell is not performed.

Correspondingly, the DU or the access network device to which the first cell belongs may learn, based on the second indication information, that the early synchronization (for example, uplink synchronization and/or downlink synchronization) for the second cell has been performed. Further, the DU or the access network device to which the first cell belongs may allocate resources to the terminal in the second cell, and communicate with the terminal on the allocated resources. If the DU or the access network device to which the first cell belongs determines that the early synchronization for the second cell is not performed, there is a need to indicate the terminal to perform synchronization with the second cell.

### ② Information about the activated TCI state of the second cell

The information about the activated TCI state of the second cell indicates the activated TCI state of the second cell. For example, the information about the activated TCI state of the second cell includes an identifier of the activated TCI state of the second cell. The activated TCI state of the second cell is an activated TCI state that is of the second cell and that is indicated by the first indication information.

Because the first network device indicates the activated TCI state of the second cell to the terminal, the first network device or the terminal may send the information about the activated TCI state of the second cell to the DU or the access network device to which the second cell belongs, so that the terminal can subsequently communicate, based on the activated TCI state of the second cell, with the DU or the access network device to which the first cell belongs, to improve communication efficiency.

It may be understood that, the foregoing ② may further include information about an activated TCI state of the first cell. For details, refer to the descriptions of the information about the activated TCI state of the second cell.

### ③ CSI of the second cell

After the first network device sends the first indication information to the terminal, the terminal may measure the downlink reference signal of the second cell based on the first indication information, to determine the downlink timing of the second cell. Further, after determining the downlink timing of the second cell, the terminal may obtain the CSI of the second cell by measuring the downlink reference signal of the second cell, and send the CSI of the second cell to the first network device. Further, the first network device may send the CSI of the second cell to the DU or the access network device to which the second cell belongs. Alternatively, after obtaining the CSI of the second cell through measurement, the terminal may store the CSI of the second cell, and after being switched to the first cell, send the CSI of the second cell to the DU or the access network device to which the first cell belongs.

Correspondingly, the DU or the access network device to which the first cell belongs may allocate, in the second cell, resources to the terminal based on the CSI of the second cell, and perform data transmission with the terminal on the allocated resources. Because the CSI of the second cell is obtained by the terminal through measurement in advance (for example, obtained through measurement before the terminal is switched to the first cell), after the terminal is switched to the first cell, the DU or the access network device to which the first cell belongs may allocate resources to the terminal based on the CSI that is of the second cell and that is measured in advance, to quickly perform data transmission in the second cell.

④ Synchronization manner information, where the synchronization manner information indicates that a manner of the early synchronization is a random access-based manner or a manner based on downlink reference signal measurement by the terminal.

For example, if the manner of the early synchronization is indicated by the first network device to the terminal, the first network device or the terminal may send the synchronization manner information to the DU or the access network device to which the first cell belongs. If the manner of the early synchronization is flexibly determined by the terminal, the terminal may send the synchronization manner information to the DU or the access network device to which the first cell belongs. Optionally, the synchronization manner information may be included in the second indication information. In addition, in another embodiment, if the manner of the early synchronization is predefined in a protocol, the first network device or the terminal may not need to send the synchronization manner information to the DU or the access network device to which the first cell belongs.

Usually, accuracy of synchronization performed based on random access is relatively high, and accuracy of synchronization performed based on downlink reference signal measurement by the terminal is relatively low. Therefore, after receiving the synchronization manner information, the DU or the access network device to which the first cell belongs may determine, based on the synchronization manner information, whether the terminal subsequently needs to be indicated to adjust the TA of the second cell. For example, if the synchronization manner information indicates that the manner of the early synchronization is the manner based on downlink reference signal measurement by the terminal, the DU or the access network device to which the first cell belongs subsequently may indicate the terminal to adjust the TA of the second cell, to improve synchronization accuracy.

For Implementation 1 and Implementation 2, it may be understood that if ①, ②, ③, and ④ are sent in Implementation 1 or Implementation 2, ①, ②, ③, and ④ may be carried in a same message or different messages. Implementation 1 and Implementation 2 may be separately implemented, or may be implemented in combination. For example, a part of ①, ②, ③, and (4) is sent in Implementation 1, and the other part of ①, ②, ③, and ④ is sent in Implementation 2.

According to the foregoing method, in a cell switch scenario, the early synchronization for the carrier aggregation may be performed, so that after the terminal is switched to a target cell, data transmission can be quickly performed in a carrier aggregation manner, thereby ensuring high-rate data transmission.

Based on the foregoing Embodiment 1, the following describes two possible implementation procedures with reference to Embodiment 2 and Embodiment 3.

### Embodiment 2

In Embodiment 2, the inter-DU switch (Scenario 2) is used as an example for description.

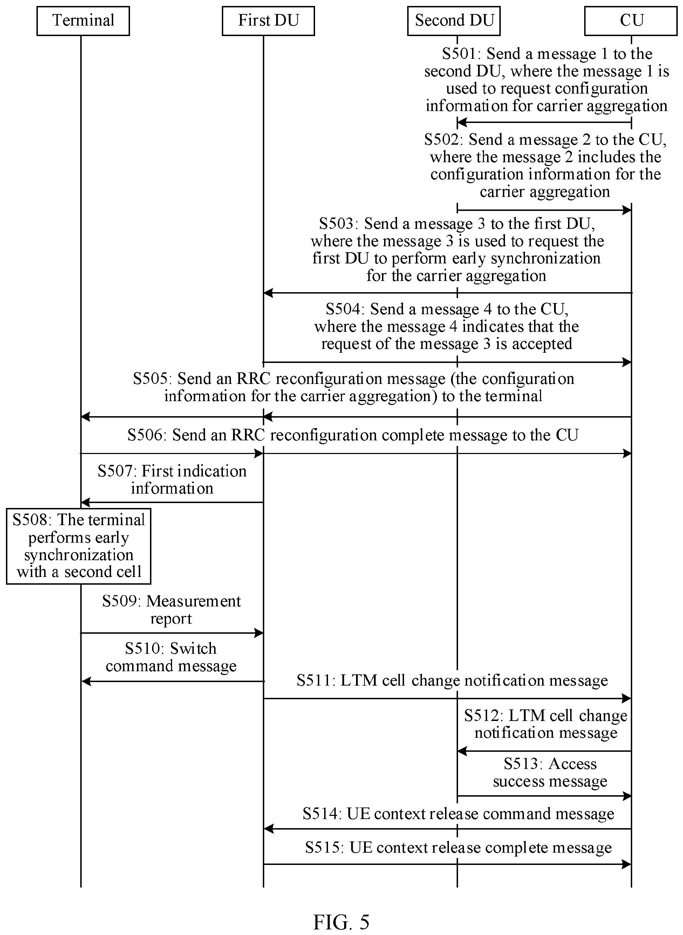

FIG. 5 is a schematic flowchart corresponding to a communication method according to Embodiment 2 of this application. As shown in FIG. 5, the method includes the following steps:
S501: A CU sends a message 1 to a second DU, where the message 1 is used to request configuration information for carrier aggregation.

For example, the message 1 may include primary cell information and secondary cell information. The primary cell information includes an identifier of a first cell, used to request to configure the first cell as a primary cell of the carrier aggregation; and the secondary cell information includes an identifier of a second cell, used to request to configure the second cell as a secondary cell of the carrier aggregation. The first cell and the second cell are different cells, and both the first cell and the second cell belong to the second DU.

In this embodiment of this application, the message 1 is further used to request early synchronization for the carrier aggregation. The message 1 may request the early synchronization for the carrier aggregation in an implicit manner; or the message 1 may alternatively request the early synchronization for the carrier aggregation in an explicit manner. For example, the secondary cell information in the message 1 further includes request information corresponding to the secondary cell (for example, the second cell), and the request information corresponding to the second cell is used to request early synchronization for the second cell.

In addition, there may be a plurality of trigger factors for sending the message 1 by the CU to the second DU. For example, a terminal sends a measurement report to a first DU. The measurement report includes a layer 3 measurement result, and may specifically include a measurement result of a neighboring cell. The neighboring cell is a cell to which the terminal may be switched after the terminal moves. Further, the first DU sends the measurement report to the CU. For example, the first DU sends an uplink (uplink, UL) RRC message to the CU, where the UL RRC message includes the measurement report. Correspondingly, the CU may determine, based on the measurement report, whether to initiate LTM configuration. If the CU determines to initiate the LTM configuration, the CU may send the message 1 to the second DU.

S502: The second DU sends a message 2 to the CU, where the message 2 includes the configuration information for the carrier aggregation. Correspondingly, the CU receives the message 2.

For example, the configuration information for the carrier aggregation may include configuration information of the primary cell (the first cell) and configuration information of the secondary cell (the second cell). The configuration information of the first cell may include a corresponding lower-layer RRC configuration, a corresponding transmission configuration indicator (transmission configuration indicator, TCI) state configuration, a corresponding random access channel (random access channel, RACH) configuration, and a corresponding reference signal (reference signal, RS) configuration when the first cell serves as the primary cell. The random access channel configuration may include a random access preamble configured for the terminal, a time-frequency resource used to carry the random access preamble, and the like. The configuration information of the second cell may include a corresponding lower-layer RRC configuration when the second cell serves as the secondary cell, and optionally, further include a TCI state configuration, a random access channel configuration, and a reference signal configuration. The "lower layer" may include a layer 1 and/or a layer 2.

Optionally, the message 2 further includes an early synchronization acceptance indication, where the early synchronization acceptance indication indicates that the second DU accepts the early synchronization for the carrier aggregation. For example, the early synchronization acceptance indication may include an identifier of one or more secondary cells of the carrier aggregation, and the identifier of the one or more secondary cells indicates that the second DU accepts early synchronization for the one or more secondary cells. In other words, when there are a plurality of secondary cells of the carrier aggregation, the second DU may accept early synchronization for all the secondary cells of the carrier aggregation, or may accept early synchronization for some secondary cells of the carrier aggregation. Therefore, the identifier of the secondary cell is carried in the early synchronization acceptance indication, to indicate which secondary cells the second DU specifically accepts early synchronization for.

In another embodiment, the message 2 may not include the early synchronization acceptance indication. In this case, the configuration information for the carrier aggregation may indicate, in an implicit manner, a third network device to accept the early synchronization for the carrier aggregation.

The message 1 may be a UE context setup request (UE context setup request) message, and the message 2 may be a UE context modification response (UE context modification response) message.

It may be understood that an F1AP configuration process for the carrier aggregation may be completed by using S501 and S502. In S501 and S502, a carrier aggregation case (to be specific, the primary cell of the carrier aggregation is the first cell, and the secondary cell of the carrier aggregation is the second cell) is used as an example. In another embodiment, for a plurality of carrier aggregation cases, S501 and S502 may be repeatedly performed, so that the CU obtains configuration information corresponding to different carrier aggregation cases. For example, a carrier aggregation case 1 is "the primary cell of the carrier aggregation is the first cell, and the secondary cell of the carrier aggregation is the second cell", and in this case, for the carrier aggregation case 1, the CU may obtain configuration information corresponding to the carrier aggregation case 1 by performing S501 and S502; and a carrier aggregation case 2 is "the primary cell of the carrier aggregation is the second cell, and the secondary cell of the carrier aggregation is the first cell", and in this case, for the carrier aggregation case 2, the CU may obtain configuration information corresponding to the carrier aggregation case 2 by performing S501 and S502.

The second cell is used as an example. For the carrier aggregation case 1, the second cell is the secondary cell, and the configuration information that is of the second cell and that is obtained by the CU includes the corresponding lower-layer RRC configuration when the second cell serves as the secondary cell, and optionally, further includes the TCI state configuration, the random access channel configuration, and the reference signal configuration of the second cell. For the carrier aggregation case 2, the second cell is the primary cell, and the configuration information that is of the second cell and that is obtained by the CU includes a corresponding lower-layer RRC configuration when the second cell serves as the primary cell, and a TCI state configuration, a random access channel configuration, and a reference signal configuration of the second cell. The TCI state configuration, the random access channel configuration, and the reference signal configuration of the second cell in the carrier aggregation case 1 are the same as the TCI state configuration, the random access channel configuration, and the reference signal configuration of the second cell in the carrier aggregation case 2. Therefore, the configuration information of the second cell in the carrier aggregation case 1 may not include the TCI state configuration, the random access channel configuration, and the reference signal configuration of the second cell.

S503: The CU sends a message 3 (or referred to as a first message) to the first DU, where the message 3 is used to request the first DU to perform early synchronization for the carrier aggregation.

Herein, the message 3 may include candidate CA information. For details, refer to the descriptions in Embodiment 1. Optionally, the message 3 further includes a TCI state configuration of the first cell and a RACH resource configuration of the first cell, and the TCI state configuration of the second cell and a RACH resource configuration of the second cell.

S504: The first DU sends a message 4 (or referred to as a second message) to the CU, where the message 4 indicates that the request of the message 3 is accepted.

For example, the message 4 may include a channel state information (channel state information, CSI) resource configuration of a source cell, and the CSI resource configuration is used by the terminal to send a lower-layer measurement result (for example, a layer 1/layer 2 measurement result) of a candidate cell (for example, the first cell) in the source cell.

The message 3 may be a UE context modification request (UE context modification request) message, and the message 4 may be a UE context modification response (UE context modification response) message.

Optionally, the CU may further send the UE context modification request message to the second DU, where the UE context modification request message may include identification information of the source cell and an RS configuration of the source cell. Correspondingly, the third network device sends the UE context modification response message to the first DU, where the UE context modification response message may include the CSI resource configuration generated by the third network device, and the CSI resource configuration is used by the terminal to send CSI of the candidate cell in the first cell. For example, after the terminal is switched to the first cell, the first cell becomes the source cell, and the source cell becomes the candidate cell.

S505: The CU sends an RRC reconfiguration message to the terminal, where the RRC reconfiguration message includes the configuration information for the carrier aggregation. Correspondingly, the terminal receives the RRC reconfiguration message.

For example, there are a plurality of manners for the CU to send the configuration information for the carrier aggregation to the terminal. For example, the CU sends a downlink (downlink, DL) RRC message to the first DU, where the DL RRC message includes the RRC reconfiguration message. Correspondingly, after receiving the DL RRC message, the first DU sends the RRC reconfiguration message to the terminal.

Optionally, for Implementation 2 in Embodiment 1, the RRC reconfiguration message includes fourth indication information, where the fourth indication information indicates the terminal to report at least one of ①, ②, ③, and ④. Alternatively, the RRC reconfiguration message does not include the fourth indication information, and the terminal reports the at least one of ①, ②, ③, and ④ by default.

In addition, the RRC reconfiguration message may further include a CSI configuration of the source cell, the CSI resource configuration of the first cell, and the like.

S506: The terminal sends an RRC reconfiguration complete message to the CU. Correspondingly, the CU receives the RRC reconfiguration complete message.

Herein, after receiving the RRC reconfiguration message, the terminal may send the RRC reconfiguration complete message to the first DU, and the first DU may forward the RRC reconfiguration complete message to the CU.

S507: The first DU sends first indication information to the terminal, where the first indication information indicates the terminal to perform early synchronization with the second cell. Correspondingly, the terminal receives the first indication information.

S508: The terminal performs early synchronization with the second cell based on the first indication information.

For example, early uplink synchronization is used as an example. For example, in a random access-based manner, after receiving the first indication information, the terminal may send a random access signal to the second DU in the second cell based on the random access channel configuration of the second cell. Further, the second DU determines a TA of the second cell (referred to as a TA 1) based on the random access signal, and sends the TA 1 and random access information corresponding to the TA 1 to the first DU via the CU. The random access information corresponding to the TA 1 indicates a specific random access preamble received by the second DU on a specific time-frequency resource of a specific cell. For example, the random access information corresponding to the TA 1 includes an identifier of a cell (for example, the identifier of the second cell), time-frequency resource information, and a random access preamble index.

Correspondingly, after receiving the TA 1 and the random access information corresponding to the TA 1, the first DU may determine, based on the identifier that is of the cell and that is included in the random access information, that a cell corresponding to the TA 1 is the second cell, and may determine, based on the time-frequency resource information and the random access preamble index that are included in the random access information, a terminal corresponding to the TA 1, so that the first DU may store the TA 1 and a correspondence between the TA 1, and the cell and the terminal.

For another example, in a manner based on downlink reference signal measurement by the terminal, after receiving the first indication information, the terminal may determine the TA of the second cell according to Formula 1 or Formula 2, and store the TA of the second cell.

S509: The terminal sends the measurement report to the first DU, where the measurement report includes lower-layer measurement results of a plurality of candidate cells.

For example, the terminal may measure RSs of the plurality of candidate cells based on RS configurations of the plurality of candidate cells, to obtain the lower-layer measurement results of the plurality of candidate cells, and send the lower-layer measurement results of the plurality of candidate cells to the first DU based on the CSI resource configuration of the source cell.

S510: The first DU sends a switch command message to the terminal, where the switch command message indicates to switch the terminal from the primary cell to the first cell. Correspondingly, the terminal is switched to the first cell based on the switch command message.

For example, if the first DU determines, based on the lower-layer measurement results of the plurality of candidate cells, to switch the terminal to the first cell, the first DU sends the switch command message to the terminal, where the switch command message includes the TA 1 and the identifier of the cell (that is, the second cell) corresponding to the TA 1 or an identifier of a timing advance group (timing advance group, TAG) 1 corresponding to the TA 1, and the TAG 1 includes the second cell. TAs of cells with a same TAG are TAs corresponding to the TAG. Optionally, the switch command message further includes a TA 2 and an identifier of a cell (that is, the first cell) corresponding to the TA 2 or an identifier of a TAG 2 corresponding to the TA 2, and the TAG 2 includes the first cell. For a manner of obtaining the TA 2 by the first DU, refer to the descriptions of obtaining the TA 1 by the first DU. Details are not described again.

Optionally, the switch command message further includes information about an activated TCI state of the first cell, and the information about the activated TCI state of the first cell is used by the terminal to receive downlink control information in a random access-less manner.

S511: The first DU sends an LTM cell change notification message to the CU, where the LTM cell change notification message indicates that a cell switch command has been initiated for the terminal, and correspondingly, the CU receives the LTM cell change notification message.

Herein, the LTM cell change notification message includes identification information of a target cell. Optionally, for Implementation 1 in Embodiment 1, the LTM cell change notification message further includes the at least one of ①, ②, ③, and ④.

S512: The CU sends the LTM cell change notification message to the second DU. Correspondingly, the second DU receives the LTM cell change notification message.

S513: After detecting access of the terminal, the second DU sends an access success message to the CU, and performs data transmission with the terminal in cells (the first cell and the second cell) for which the carrier aggregation is performed.

For example, the terminal accesses the second DU in the first cell in the random access or the random access-less manner. Correspondingly, the second DU may detect the access of the terminal, and send the downlink control information to the terminal based on the information about the activated TCI state of the first cell. The random access-less manner is that the terminal accesses the first cell via a physical uplink shared channel (physical uplink shared channel, PUSCH) based on the TA of the first cell in the switch command message, instead of accessing the first cell via a random access channel.

For example, for behavior on a second DU side, refer to the descriptions in Embodiment 1.

S514: After receiving the access success message, the CU sends a UE context release command message to the first DU. The UE context release command message indicates to release a resource of the candidate cell of the source DU.

S515: After releasing the resource of the candidate cell of the source DU based on the UE context release command message, the first DU sends a UE context release complete message to the CU.

It may be understood that, the foregoing step procedure uses Scenario 2 as an example. For Scenario 1 and Scenario 3, refer to the foregoing step procedure for implementation. In Scenario 1, because the first DU and the second DU may be a same DU, there is no need to perform related operations of interaction between the first DU and the second DU. In Scenario 3, the first CU manages the first DU, and the second CU manages the second DU. In the foregoing embodiment, the interaction between the first DU and the second DU (for example, the first DU sends information a to the second DU) may be replaced with: The first DU sends the information a to the first CU, the first CU sends the information a to the second CU, and the second CU sends the information a to the second DU.

### Embodiment 3

In Embodiment 3, the inter-station switch (Scenario 4) is used as an example for description.

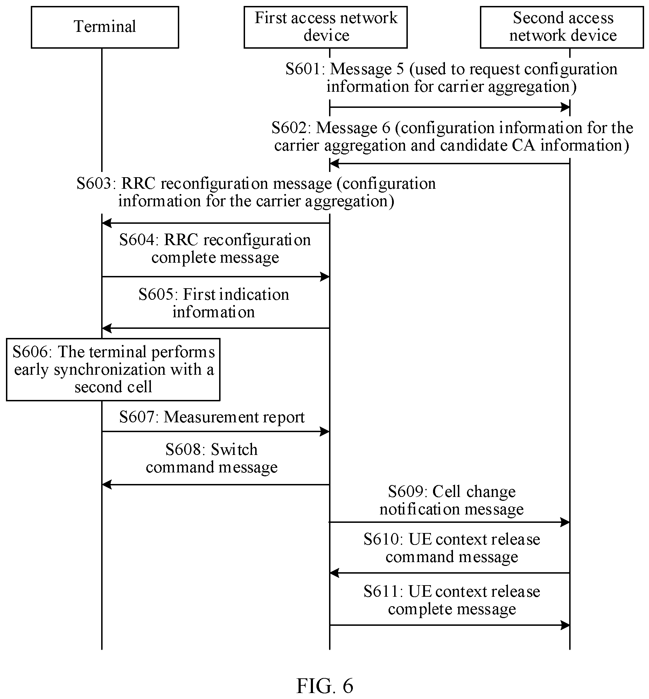

FIG. 6 is a schematic flowchart corresponding to a communication method according to Embodiment 3 of this application. As shown in FIG. 6, the method includes the following steps:
S601: A first access network device sends a message 5 to a second access network device, where the message 5 is used to request configuration information for carrier aggregation. Correspondingly, the second access network device receives the message 5.

Herein, the first access network device and the second access network device are different access network devices. For specific content of the message 5, refer to the descriptions of the message 1 in Embodiment 2.

S602: The second access network device sends a message 6 (or referred to as a first message) to the first access network device, where the message 6 includes the configuration information for the carrier aggregation. Correspondingly, the first access network device receives the message 6.

Herein, the message 6 further includes candidate CA information (or an early synchronization acceptance indication). For details, refer to the descriptions in Embodiment 1 or Embodiment 2. For the configuration information for the carrier aggregation, refer to the descriptions in Embodiment 2.

For example, the message 5 and the message 6 may be Xn messages.

S603: The first access network device sends the configuration information for the carrier aggregation to a terminal. Correspondingly, the terminal receives the configuration information for the carrier aggregation.

For example, the first access network device sends an RRC reconfiguration message to the terminal, where the RRC reconfiguration message includes the configuration information for the carrier aggregation. For details, refer to descriptions of the RRC reconfiguration message in Embodiment 2.

S604: The terminal sends an RRC reconfiguration complete message to the first access network device.

S605: The first access network device sends first indication information to the terminal, where the first indication information indicates the terminal to perform early synchronization with a second cell. Correspondingly, the terminal receives the first indication information.

S606: The terminal performs early synchronization with the second cell based on the first indication information.

For example, early uplink synchronization is used as an example. For example, in a random access-based manner, after receiving the first indication information, the terminal may send a random access signal to the second access network device in the second cell based on a random access channel configuration of the second cell. Further, the second access network device determines a TA of the second cell (referred to as a TA 1) based on the random access signal, and sends the TA 1 and random access information corresponding to the TA 1 to the first access network device. The random access information corresponding to the TA 1 indicates a specific random access preamble received by the second access network device on a specific time-frequency resource of a specific cell. For example, the random access information corresponding to the TA 1 includes an identifier of a cell (for example, an identifier of the second cell), time-frequency resource information, and a random access preamble index.

Correspondingly, after receiving the TA 1 and the random access information corresponding to the TA 1, the first access network device may determine, based on the identifier that is of the cell and that is included in the random access information, that a cell corresponding to the TA 1 is the second cell, and may determine, based on the time-frequency resource information and the random access preamble index that are included in the random access information, a terminal corresponding to the TA 1, so that the first access network device may store the TA 1 and a correspondence between the TA 1, and the cell and the terminal.

For another example, in a manner based on downlink reference signal measurement by the terminal, after receiving the first indication information, the terminal may determine the TA of the second cell according to Formula 1 or Formula 2, and store the TA of the second cell.

S607: The terminal sends a measurement report to the first access network device, where the measurement report includes measurement results of a plurality of candidate cells.

S608: The first access network device sends a switch command message to the terminal, where the switch command message indicates to switch the terminal from a primary cell to a first cell. Correspondingly, the terminal is switched to the first cell based on the switch command message.

For example, for S605 and S606, refer to the descriptions of S508 and S509 in Embodiment 2.

S609: The first access network device sends a cell change notification message to the second access network device, where the cell change notification message indicates that a cell switch command has been initiated for the terminal.

S610: After detecting access of the terminal, the second access network device sends a UE context release command message to the first access network device, and performs data transmission with the terminal in cells (the first cell and the second cell) for which the carrier aggregation is performed.

For example, for behavior on a second access network device side, refer to the descriptions in Embodiment 1.

S611: After releasing a resource of a candidate cell of a source DU based on the UE context release command message, the first access network device sends a UE context release complete message to the second access network device.

It may be understood that, the foregoing step procedure uses Scenario 4 as an example. For Scenario 5, refer to the foregoing step procedure for implementation. In Scenario 5, because the first access network device and the second access network device may be a same access network device, there is no need to perform related operations of interaction between the first access network device and the second access network device.

For a plurality of embodiments of this application, it may be understood that:
1. In the foregoing embodiments, the early synchronization for the secondary cell is mainly described. For early synchronization for the primary cell, refer to the foregoing embodiments for implementation, or the early synchronization may not be performed for the primary cell. Implementation of the primary cell is not limited in embodiments of this application. In addition, a message name in embodiments of this application is merely an example, and is not specifically limited.
2. The foregoing focuses on a difference between different implementations or different examples. For other content other than the difference, reference may be made between different implementations or different examples. In addition, different implementations or different examples may be partially implemented, or may be combined for implementation, or may be partially combined for implementation, or the like. Details are not listed one by one in embodiments of this application.
3. Step numbers in the flowcharts described in the foregoing embodiments are merely an example of an execution procedure, and do not constitute any limitation on an execution sequence of the steps. In embodiments of this application, there may be no strict execution sequence between steps that do not have a time sequence dependency relationship with each other. In addition, not all steps shown in the flowcharts are mandatory steps. Some steps may be added or deleted based on the flowcharts based on an actual requirement, or only some steps included in the flowcharts may be performed.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the terminal and the network device based on the foregoing method examples. For example, division into each functional unit may be based on each corresponding function, or two or more functions may be integrated into one unit. The integrated unit may be implemented in a form of hardware, or may be implemented in a form of a software functional unit.

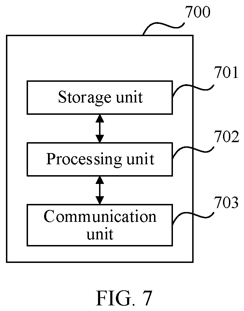

When the integrated unit is used, FIG. 7 is a block diagram of a possible example of an apparatus according to an embodiment of this application. As shown in FIG. 7, the apparatus 700 may include a processing unit 702 and a communication unit 703. The processing unit 702 is configured to control and manage actions of the apparatus 700. The communication unit 703 is configured to support the apparatus 700 in communicating with another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.
1. The apparatus 700 may be the first network device in the foregoing embodiments. The processing unit 702 may support the apparatus 700 in performing actions of the first network device in the foregoing method examples. Alternatively, the processing unit 702 mainly performs an internal action of the first network device in the foregoing method examples, and the communication unit 703 may support communication between the apparatus 700 and another device.

For example, in an embodiment, the communication unit 703 is configured to: receive a first message from a second network device, where the first message is used to request the first network device to perform early synchronization for carrier aggregation, a primary cell of the carrier aggregation is a first cell, a secondary cell of the carrier aggregation includes a second cell, and the early synchronization includes early uplink synchronization and/or early downlink synchronization; and send first indication information to the terminal based on the first message, where the first indication information indicates the terminal to perform early synchronization with the second cell.

In a possible design, after sending the first indication information to the terminal, the communication unit 703 is further configured to send a switch command message to the terminal, where the switch command message indicates to switch the terminal from a primary cell to the first cell.

In a possible design, the early synchronization includes uplink synchronization and/or downlink synchronization before the terminal receives the switch command message.

In a possible design, the first message includes identification information of the second cell, and the identification information of the second cell is used to request the first network device to perform early synchronization for the second cell.

In a possible design, the first indication information is used to activate a transmission configuration indication TCI state of the second cell, and the TCI state is used by the terminal to determine downlink timing of the second cell.

In a possible design, the communication unit 703 is further configured to send information about an activated TCI state of the second cell to the second network device.

In a possible design, the first indication information indicates the terminal to send a random access signal in the second cell, and the random access signal is used to determine a timing advance TA of the second cell.

In a possible design, the communication unit 703 is further configured to: receive the TA of the second cell; and send the switch command message to the terminal, where the switch command message includes the TA of the second cell.

In a possible design, the switch command message further includes a TA of the first cell.

In a possible design, the communication unit 703 is further configured to send second indication information to the second network device, where the second indication information indicates that the early synchronization for the carrier aggregation has been performed.

In a possible design, the second indication information includes the identification information of the second cell, and the identification information of the second cell indicates that the early synchronization for the second cell has been performed.

In a possible design, the second indication information includes synchronization manner information, and the synchronization manner information indicates that a manner of the early synchronization is a random access-based manner or a manner based on downlink reference signal measurement by the terminal.

In a possible design, the communication unit 703 is further configured to: receive channel state information CSI that is of the second cell and that is sent by the terminal, where the CSI of the second cell is determined based on the first indication information; and send the CSI of the second cell to the second network device.

2. The apparatus 700 may be the second network device in the foregoing embodiments. The processing unit 702 may support the apparatus 700 in performing actions of the second network device in the foregoing method examples. Alternatively, the processing unit 702 mainly performs an internal action of the second network device in the foregoing method examples, and the communication unit 703 may support communication between the apparatus 700 and another device.

For example, in an embodiment, the communication unit 703 is configured to: send a first message to a first network device, where the first message is used to request the first network device to perform early synchronization for carrier aggregation, a primary cell of the carrier aggregation is a first cell, a secondary cell of the carrier aggregation includes a second cell, and the early synchronization includes early uplink synchronization and/or early downlink synchronization; and receive a second message from the first network device, where the second message indicates that the request of the first message is accepted.

In a possible design, the communication unit 703 is further configured to receive second indication information from the first network device or a terminal, where the second indication information indicates that the early synchronization for the carrier aggregation has been performed.

In a possible design, the second indication information includes identification information of the second cell, and the identification information of the second cell indicates that early synchronization for the second cell has been performed.

In a possible design, the second indication information includes synchronization manner information, and the synchronization manner information indicates that a manner of the early synchronization is a random access-based manner or a manner based on downlink reference signal measurement by the terminal.

In a possible design, the communication unit 703 is further configured to receive CSI of the second cell from the first network device or the terminal, where the CSI of the second cell is determined before the terminal is switched to the first cell.

In a possible design, the communication unit 703 is further configured to receive information about an activated TCI state of the second cell from the first network device or the terminal.

3. The apparatus 700 may be the terminal in the foregoing embodiments. The processing unit 702 may support the apparatus 700 in performing actions of the terminal in the foregoing method examples. Alternatively, the processing unit 702 mainly performs an internal action of the terminal in the foregoing method examples, and the communication unit 703 may support communication between the apparatus 700 and another device.

For example, in an embodiment, the communication unit 703 is configured to: receive configuration information for carrier aggregation, where a primary cell of the carrier aggregation is a first cell, and a secondary cell of the carrier aggregation includes a second cell; receive first indication information, where the first indication information indicates the terminal to perform early synchronization with the second cell, and the early synchronization includes early uplink synchronization and/or early downlink synchronization; and perform early synchronization with the second cell based on the first indication information.

In a possible design, after receiving the first indication information, the communication unit 703 is further configured to receive a switch command message, where the switch command message indicates to switch the terminal to the first cell, and the switch command message includes a TA of the second cell.

In a possible design, the communication unit 703 is further configured to send second indication information, where the second indication information indicates that early synchronization for the carrier aggregation has been performed.

In a possible design, the second indication information includes identification information of the second cell, and the identification information of the second cell indicates that the early synchronization for the second cell has been performed.

In a possible design, the second indication information includes synchronization manner information, and the synchronization manner information indicates that a manner of the early synchronization is a random access-based manner or a manner based on downlink reference signal measurement by the terminal.

In a possible design, the communication unit 703 is further configured to send CSI of the second cell, where the CSI of the second cell is determined based on the first indication information.

In a possible design, the first indication information is used to activate a transmission configuration indication TCI state of the second cell; and the processing unit 702 is configured to determine downlink timing of the second cell based on an activated TCI state of the second cell.

In a possible design, the communication unit 703 is further configured to send information about an activated TCI state of the second cell.

In a possible design, the first indication information indicates the terminal to send a random access signal in the second cell; and the communication unit 703 is further configured to send the random access signal in the second cell based on the first indication information, where the random access signal is used to determine the TA of the second cell.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

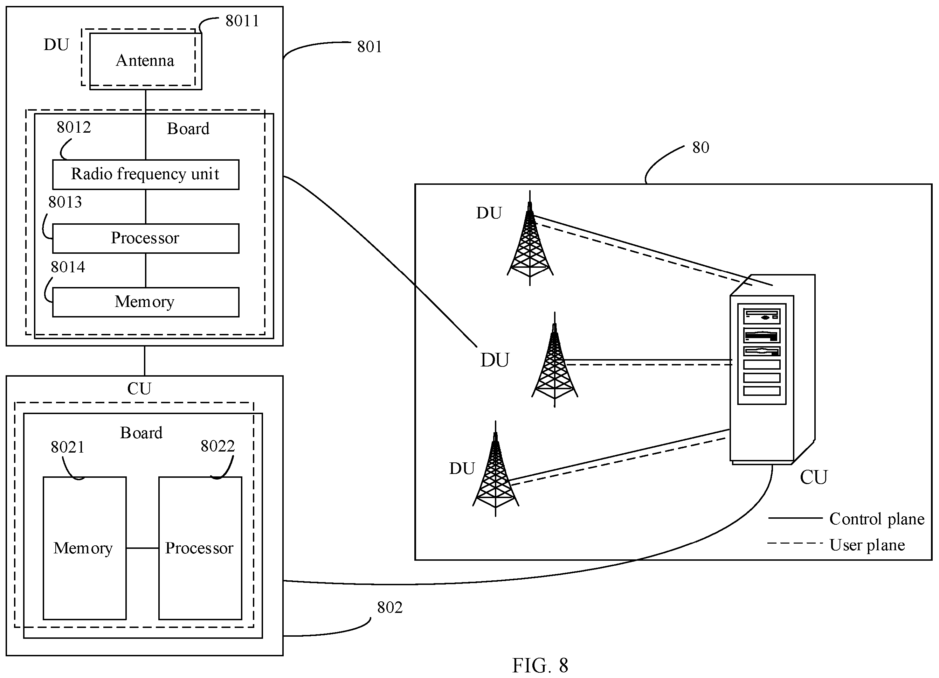

FIG. 8 is a diagram of a structure of a network device according to an embodiment of this application. The network device may be used in the communication system shown in FIG. 1, to perform functions of the network device in the foregoing method embodiments. As shown in FIG. 8, the network device 80 may be an access network device, and the network device 80 may include one or more DUs 801 and one or more CUs 802. The DU 801 may include at least one antenna 8011, at least one radio frequency unit 8012, at least one processor 8013, and at least one memory 8014. The DU 801 is mainly configured to: receive a radio frequency signal and send a radio frequency signal, perform conversion between a radio frequency signal and a baseband signal, and perform partial baseband processing. The CU 802 may include at least one processor 8022 and at least one memory 8021.

The CU 802 is mainly configured to: perform baseband processing, control the network device, and so on. The DU 801 and the CU 802 may be physically disposed together, or may be physically separated, namely, a distributed base station. The CU 802 is a control center of the network device, may also be referred to as a processing unit, and is mainly configured to complete a baseband processing function. For example, the CU 802 may be configured to control the network device to perform an operation procedure related to the network device in the foregoing method embodiments.

In addition, optionally, the network device 80 may include one or more radio frequency units, one or more DUs, and one or more CUs. The DU may include at least one processor 8013 and at least one memory 8014, the radio frequency unit may include at least one antenna 8011 and at least one radio frequency unit 8012, and the CU may include at least one processor 8022 and at least one memory 8021.

In an example, the CU 802 may include one or more boards. A plurality of boards may jointly support a radio access network (for example, a 5G network) with a single access indication, or may separately support radio access networks (for example, an LTE network, a 5G network, or another network) of different access standards. The memory 8021 and the processor 8022 may serve the one or more boards. In other words, a memory and a processor may be disposed on each board. Alternatively, a plurality of boards may share a same memory and a same processor. In addition, a necessary circuit may further be disposed on each board. The DU 801 may include one or more boards. A plurality of boards may jointly support a radio access network (for example, a 5G network) with a single access indication, or may separately support radio access networks (for example, an LTE network, a 5G network, or another network) of different access standards. The memory 8014 and the processor 8013 may serve the one or more boards. In other words, a memory and a processor may be disposed on each board. Alternatively, a plurality of boards may share a same memory and a same processor. In addition, a necessary circuit may further be disposed on each board.

The network device shown in FIG. 8 can implement processes related to the network device in the foregoing method embodiments. Operations and/or functions of modules in the network device shown in FIG. 8 are respectively used to implement corresponding procedures in the foregoing method embodiments. For details, refer to the descriptions in the foregoing method embodiments. To avoid repetition, detailed descriptions are properly omitted herein.

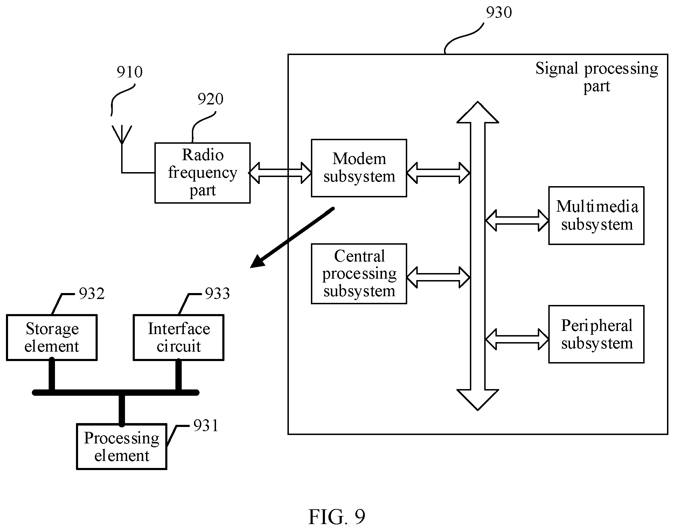

FIG. 9 is a diagram of a structure of a terminal according to an embodiment of this application. The terminal may be used in the communication system shown in FIG. 1, to implement operations of the terminal in the foregoing embodiments. As shown in FIG. 9, the terminal includes an antenna 910, a radio frequency part 920, and a signal processing part 930. The antenna 910 is connected to the radio frequency part 920. In a downlink direction, the radio frequency part 920 receives, through the antenna 910, information sent by a network device, and sends, to the signal processing part 930 for processing, the information sent by the network device. In an uplink direction, the signal processing part 930 processes information from the terminal, and sends the information to the radio frequency part 920. The radio frequency part 920 processes the information from the terminal, and then sends processed information to the network device through the antenna 910.

The signal processing part 930 may include a modem subsystem, configured to process data at each communication protocol layer, and may further include a central processing subsystem, configured to implement processing at an operating system layer and an application layer of the terminal. In addition, the signal processing part 930 may further include another subsystem, for example, a multimedia subsystem or a peripheral subsystem. The multimedia subsystem is configured to control a camera, a screen display, or the like of the terminal. The peripheral subsystem is configured to implement a connection to another device. The modem subsystem may be a separately disposed chip.

The modem subsystem may include one or more processing elements 931, for example, include one main control CPU and another integrated circuit. In addition, the modem subsystem may further include a storage element 932 and an interface circuit 933. The storage element 932 is configured to store data and a program. However, the program used to perform the method performed by the terminal in the foregoing methods may not be stored in the storage element 932, but is stored in a memory outside the modem subsystem, and is loaded and used by the modem subsystem when to be used. The interface circuit 933 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SoC, and the SoC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processor element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 7. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of these forms of integrated circuits. The storage element may be implemented by using a memory, and a function of the storage element may be the same as a function of the storage unit described in FIG. 7. The storage element may be a memory, or may be a collective name of a plurality of memories.

The terminal shown in FIG. 9 can implement processes related to the terminal in the foregoing method embodiments. Operations and/or functions of modules in the terminal shown in FIG. 9 are respectively used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not intended to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method is applied to a first network device, and the method comprises:
receiving a first message from a second network device, wherein the first message is used to request the first network device to perform early synchronization for carrier aggregation, a primary cell of the carrier aggregation is a first cell, a secondary cell of the carrier aggregation comprises a second cell, and the early synchronization comprises early uplink synchronization and/or early downlink synchronization; and
sending first indication information to the terminal based on the first message, wherein the first indication information indicates the terminal to perform early synchronization with the second cell.

2. The method according to claim 1, wherein after the sending the first indication information to the terminal, the method further comprises:
sending a switch command message to the terminal, wherein the switch command message indicates to switch the terminal from a primary cell to the first cell, wherein
the early synchronization comprises uplink synchronization and/or downlink synchronization before the terminal receives the switch command message.

3. The method according to claim 1 or 2, wherein the first message comprises identification information of the second cell, and the identification information of the second cell is used to request the first network device to perform early synchronization for the second cell.

4. The method according to any one of claims 1 to 3, wherein the first indication information is used to activate a transmission configuration indication TCI state of the second cell, and the TCI state is used by the terminal to determine downlink timing of the second cell.

5. The method according to claim 4, wherein the method further comprises:
sending information about an activated TCI state of the second cell to the second network device.

6. The method according to any one of claims 1 to 5, wherein the first indication information indicates the terminal to send a random access signal in the second cell, and the random access signal is used to determine a timing advance TA of the second cell.

7. The method according to claim 6, wherein the method further comprises:
receiving the TA of the second cell; and
sending the switch command message to the terminal, wherein the switch command message comprises the TA of the second cell.

8. The method according to any one of claims 1 to 7, wherein the method further comprises:
sending second indication information to the second network device, wherein the second indication information indicates that the early synchronization for the carrier aggregation has been performed.

9. The method according to claim 8, wherein the second indication information comprises the identification information of the second cell, and the identification information of the second cell indicates that the early synchronization for the second cell has been performed.

10. The method according to claim 8 or 9, wherein the second indication information comprises synchronization manner information, and the synchronization manner information indicates that a manner of the early synchronization is a random access-based manner or a manner based on downlink reference signal measurement by the terminal.

11. The method according to any one of claims 1 to 10, wherein the method further comprises:
receiving channel state information CSI that is of the second cell and that is sent by the terminal, wherein the CSI of the second cell is determined based on the first indication information; and
sending the CSI of the second cell to the second network device.

12. A communication method, wherein the method is applied to a second network device, and the method comprises:
sending a first message to a first network device, wherein the first message is used to request the first network device to perform early synchronization for carrier aggregation, a primary cell of the carrier aggregation is a first cell, a secondary cell of the carrier aggregation comprises a second cell, and the early synchronization comprises early uplink synchronization and/or early downlink synchronization; and
receiving a second message from the first network device, wherein the second message indicates that the request of the first message is accepted.

13. The method according to claim 12, wherein the method further comprises:
receiving second indication information from the first network device or a terminal, wherein the second indication information indicates that the early synchronization for the carrier aggregation has been performed.

14. The method according to claim 13, wherein the second indication information comprises identification information of the second cell, and the identification information of the second cell indicates that early synchronization for the second cell has been performed.

15. The method according to claim 13 or 14, wherein the second indication information comprises synchronization manner information, and the synchronization manner information indicates that a manner of the early synchronization is a random access-based manner or a manner based on downlink reference signal measurement by the terminal.

16. The method according to any one of claims 12 to 15, wherein the method further comprises:
receiving CSI of the second cell from the first network device or the terminal, wherein the CSI of the second cell is obtained through measurement before the terminal is switched to the first cell.

17. The method according to any one of claims 12 to 16, wherein the method further comprises:
receiving information about an activated TCI state of the second cell from the first network device or the terminal.

18. A communication method, wherein the method is applied to a terminal, and the method comprises:
receiving configuration information for carrier aggregation, wherein a primary cell of the carrier aggregation is a first cell, and a secondary cell of the carrier aggregation comprises a second cell;
receiving first indication information, wherein the first indication information indicates the terminal to perform early synchronization with the second cell, and the early synchronization comprises early uplink synchronization and/or early downlink synchronization; and
performing early synchronization with the second cell based on the first indication information.

19. The method according to claim 18, wherein after receiving the first indication information, the method further comprises:
receiving a switch command message, wherein the switch command message indicates to switch the terminal to the first cell, and the switch command message comprises a TA of the second cell.

20. The method according to claim 18 or 19, wherein the method further comprises:
sending second indication information, wherein the second indication information indicates that early synchronization for the carrier aggregation has been performed.

21. The method according to claim 20, wherein the second indication information comprises identification information of the second cell, and the identification information of the second cell indicates that the early synchronization for the second cell has been performed.

22. The method according to claim 20 or 21, wherein the second indication information comprises synchronization manner information, and the synchronization manner information indicates that a manner of the early synchronization is a random access-based manner or a manner based on downlink reference signal measurement by the terminal.

23. The method according to any one of claims 18 to 22, wherein the method further comprises:
sending CSI of the second cell, wherein the CSI of the second cell is determined based on the first indication information.

24. The method according to any one of claims 18 to 23, wherein the first indication information is used to activate a transmission configuration indication TCI state of the second cell; and
the performing early synchronization with the second cell based on the first indication information comprises: determining downlink timing of the second cell based on an activated TCI state of the second cell.

25. The method according to claim 24, wherein the method further comprises:
sending information about the activated TCI state of the second cell.

26. A communication apparatus, comprising a module configured to perform the method according to any one of claims 1 to 25.

27. A communication apparatus, comprising a processor, wherein the processor is coupled to a memory, the memory stores a computer program, and the processor is configured to invoke the computer program in the memory, to cause the communication apparatus to perform the method according to any one of claims 1 to 25.

28. A communication system, wherein the communication system comprises a first network device, a second network device, and a terminal, the first network device is configured to perform the method according to any one of claims 1 to 11, the second network device is configured to perform the method according to any one of claims 12 to 17, and the terminal is configured to perform the method according to any one of claims 18 to 25.

29. A computer-readable storage medium, wherein the storage medium stores a computer program or instructions, and when the computer program or the instructions are executed by a computer, the method according to any one of claims 1 to 25 is implemented.

30. A computer program product, wherein when a computer reads and executes the computer program product, the computer is caused to perform the method according to any one of claims 1 to 25.
